# EUROPÄISCHE PATENTSCHRIFT

(11) **EP 0 931 253 B1**
(45) Veröffentlichungstag und Bekanntmachung des Hinweises auf die Patenterteilung: **13.10.2004**
(21) Anmeldenummer: 97937581.3
(22) Anmeldetag: 13.08.1997
(51) Int. Cl.: G01M 3/22, G01M 3/32

(54) **PRÜFUNG DER DICHTHEIT VON VERPACKUNGEN**
PROCESS FOR TESTING THE TIGHTNESS OF PACKAGES
CONTROLE DE L'ETANCHEITE D'EMBALLAGES

(30) Priorität: 12.10.1996 DE 19642099
(43) Veröffentlichungstag der Anmeldung: 28.07.1999
(73) Patentinhaber: Leybold Vacuum GmbH, 50968 Köln (DE)
(72) Erfinder: NOTHHELFER, Markus, D-50169 Kerpen (DE); SECKEL, Ingo, D-50321 Brühl (DE)
(74) Vertreter: Leineweber, Jürgen, Dipl.-Phys.
(86) Internationale Anmeldenummer: PCT/EP1997/004423
(87) Internationale Veröffentlichungsnummer: WO 1998/016809

(56) Entgegenhaltungen:
- EP-A- 0 152 981
- FR-A- 2 319 891
- US-A- 3 813 923
- US-A- 5 513 516

## Beschreibung

Die Erfindung betrifft eine Vorrichtung zur Prüfung der Dichtheit der Verpackung eines verpackten Gegenstandes mit den Merkmalen des Oberbegriffs des Patentanspruchs 1.

Lebensmittel, Pharmazeutika, in der Medizin einsetzbare, zum Beispiel nur einmal verwendbare Gegenstände usw. befinden sich in aller Regel in einer Verpackung (Folie, Fläschchen oder Ampulle mit Verschluss usw.). Diese Verpackung hat die Aufgabe, den verpackten Gegenstand vor jeder Kontamination von außen zu schützen. Bei Lebensmitteln hat die Verpackung häufig noch den zusätzlichen Zweck, einen Aromaverlust des verpackten Gutes zu verhindern. Diese und andere Zwecke kann die gewählte Verpackung nur dann erfüllen, wenn sie hermetisch dicht ist.

Eine Vorrichtung mit den Merkmalen des Oberbegriffs des Patentanspruchs 1 ist aus der US-A-38 13 923 bekannt. Das Einschließen des auf Lecks zu untersuchenden, verpackten Gegenstandes zwischen den Folien erfolgt entweder von außen mit Druckluft oder von innen mit Vakuum. Zur Vakuumlösung sind Details nicht offenbart.

Der vorliegenden Erfindung liegt die Aufgabe zugrunde, eine Vorrichtung der hier betroffenen Art zu schaffen, mit deren Hilfe die Dichtheit der Verpackung eines verpackten Gegenstandes einfach, schnell und sicher überprüfbar ist.

Erfindungsgemäß wird diese Aufgabe durch die Merkmale der Patentansprüche gelöst.

Die erfindungsgemäße Prüfung der Dichtheit der Verpakkung erfolgt in der Weise, dass der verpackte Gegenstand in einen Testraum eingebracht wird, den zwei dehnbare Folien dadurch bilden, dass ein den verpackten Gegenstand enthaltender Raum zwischen den Folien derart evakuiert wird, dass die Folien in der Lage sind, den verpackten Gegenstand einzuschliessen. Die Folien weisen zumindest in den Bereichen ihrer Oberflächen, die dem verpackten Gegenstand zugewandt sind und in denen die Dichtheitsprüfung der Verpackung stattfinden soll, Mittel auf, die einen zusammenhängenden Zwischenraum über den zu prüfenden Bereichen der Verpackung bilden. Dieser Zwischenraum wird auf einen Druck evakuiert, der kleiner ist als der Druck innerhalb der Verpackung. Zur Feststellung, ob Testgas durch den zu untersuchenden Bereich der Verpackung nach außen dringt, wird der evakuierte Zwischenraum mit einem testgasempfindlichen Detektor verbunden. Die sich auf der Verpackung abstützenden Folienbereiche für die Verpackung bilden einen Schutz. Selbst hochempfindliche Verpackungen können einem relativ grossen Differenzdruck ausgesetzt werden, welcher massgebend für die Empfindlichkeit der Dichtheitsprüfung ist.

Dadurch, dass zwei Evakuierungsanschlüsse vorgesehen sind, kann eine schnelle und damit kurzzeitige Evakuierung des Testraumes erreicht werden.

Wesentlich ist, dass sich in der Verpackung ein Testgas befindet. Dieses kann zum Beispiel ein Schutzgas für das verpackte Gut sein (zum Beispiel Stickstoff, Argon, Kohlendioxid oder dergleichen) . Eine andere Möglichkeit besteht darin, im Zuge des Verpackungsprozesses dafür zu sorgen, dass sich innerhalb der Verpackung ein typisches Testgas, wie Helium, befindet. Wesentlich ist, dass ein Detektor in der Lage ist, das in der Verpackung des verpackten Gegenstandes vorhandene Testgas von Luft zu unterscheiden. Besonders vorteilhaft ist es, wenn die Verpackung einen Helium-Gasanteil enthält, der 5 bis 25 %, vorzugsweise 10 %, beträgt.

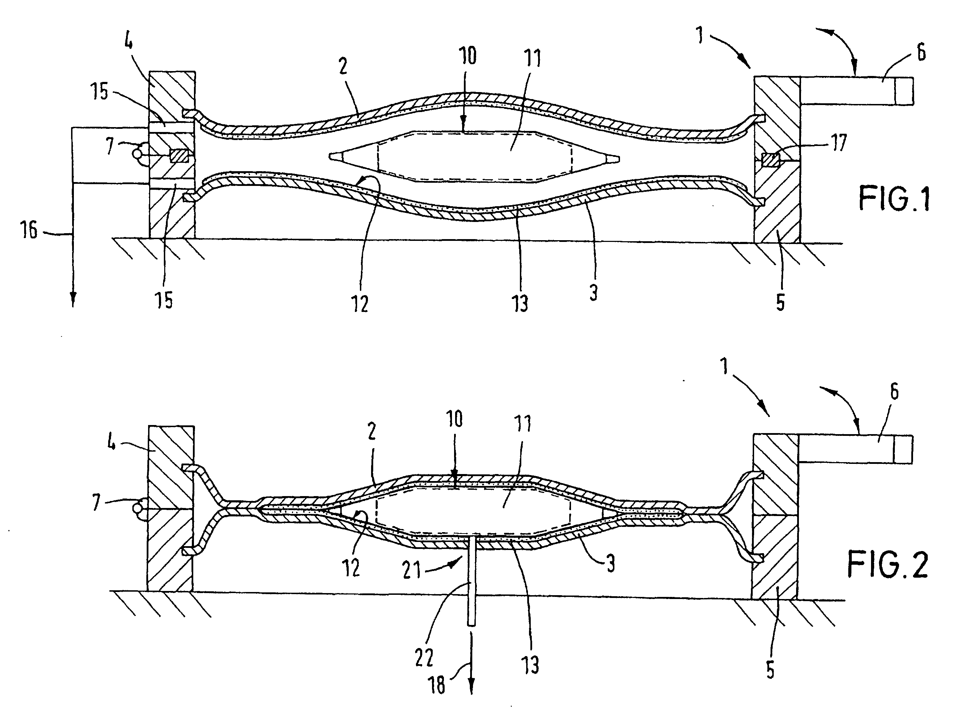

Die Erfindung soll anhand von in den Figuren 1 bis 4 schematisch dargestellten Ausführungsbeispielen für eine Vorrichtung zur Durchführung der Dichtheitsprüfung von Verpackungen erläutert werden.

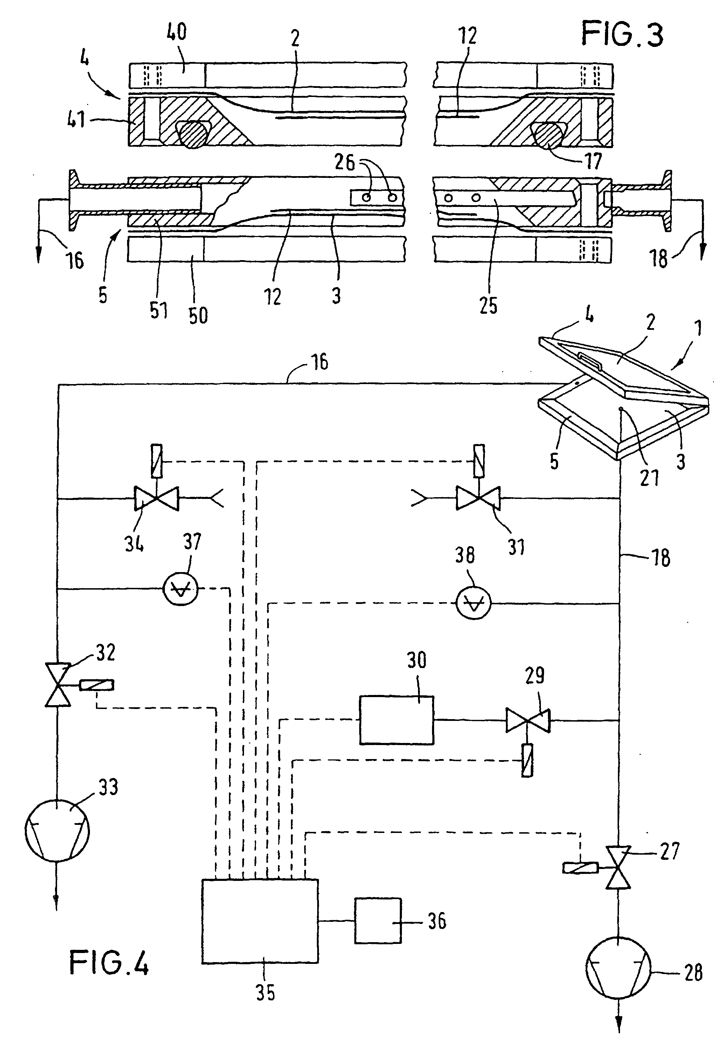

Die Figuren 1 bis 3 zeigen jeweils Schnitte durch Rahmenkonstruktionen 1 mit darin befestigten Folien 2 und 3. Figur 4 zeigt ein Schaltschema von für den Betrieb einer Dichtheitsprüfeinrichtung nach der Erfindung notwendigen Mitteln. Die Figuren 1 und 2 zeigen hierbei keine Ausführungsbeispiele des beauspruchten Erfindung, sondern sind lediglich zu illustratiren Zwecken dargestellt. Die Rahmenkonstruktionen 1 nach den Figuren 1 bis 3 umfassen jeweils zwei Rahmen 4 und 5, in denen die Folien 2 bzw. 3 derart befestigt, insbesondere eingespannt sind, dass sie sich im wesentlichen parallel zueinander erstrecken. Mit Hilfe des Handgriffes 6 kann der obere Rahmen 4 angehoben werden. Zweckmässig sind die Rahmen 4, 5 über ein Scharnier 7 (Figuren 1, 2) miteinander verbunden.

Bei den Beispielen nach den Figuren 1 und 2 befindet sich zwischen den Folien 2 und 3 ein Gegenstand 10 mit einer auf Dichtheit zu überprüfenden Verpackung 11. Die Folien 2, 3 sind im Bereich ihrer dem Gegenstand 10 zugewandten Seite mit Mitteln 12 ausgerüstet, die einen zusammenhängenden Zwischenraum 13 zwischen den Folien 2, 3 und der Verpackung 11 sicherstellen. Diese Mittel 12 können separate Netze, Porenfolien, Sinterfolien oder auch Noppenfolien sein. Auch die Folien 2, 3 selbst können mit Noppen ausgerüstet sein. Schliesslich besteht die Möglichkeit, Folien einzusetzen, die einseitig porös sind.

Um den zur Dichtheitsprüfung der Verpackung notwendigen Testraum zu bilden, wird der Raum zwischen den Folien 2, 3 evakuiert. Dadurch legen sich die Folien 2, 3 dem Gegenstand 10 an und bilden einen Testraum, der den von den Mitteln 12 gebildeten Zwischenraum 13 und das Volumen des verpackten Gegenstandes 10 umfasst. Im Testraum wird ein Druck erzeugt, der ausreichend niedrig ist, um - für den Fall des Vorhandenseins eines Lecks - innerhalb der Verpackung befindliches Testgas austreten zu lassen. Der möglicherweise innerhalb der Verpackung herrschende Unterdruck (Vakuumverpackung) ist dabei zu berücksichtigen. Das Testgas wird in an sich bekannter Weise mit einem an den Zwischenraum 13 / Testraum angeschlossenen testgasempfindlichen Detektor nachgewiesen.

Beim Beispiel nach Figur 1 erfolgt die Evakuierung über Bohrungen 15 in einem oder beiden Rahmen 4, 5 sowie über die daran angeschlossene Leitung 16. Die den Zwischenraum 13 bildenden Mittel 12 erstrecken sich bis in die Randbereiche der Folien 2, 3 hinein, damit gegebenenfalls austretendes Testgas über die Bohrungen 15 in die Leitung 16 gelangen kann, an die auch der testgasempfindliche Detektor angeschlossen ist. Zur Abdichtung des Testraumes nach aussen ist zwischen den Rahmen 4, 5 die Dichtung 17 vorgesehen.

Beim Beispiel nach Figur 2 erfolgt die Evakuierung des Testraumes über einen zentralen Anschluss 21, der z.B. als Schlauchanschluss 22 ausgebildet sein kann und mit der Leitung 18 in Verbindung steht. Die den Zwischenraum 13 bildenden Mittel 12 erstrecken sich nicht bis in den Randbereich der Folien 2, 3, so dass die äussere Abdichtung des Testraumes dadurch erfolgt, dass sich die Folien 2, 3 nach einer beginnenden Evakuierung im Randbereich einander unmittelbar anlegen. Die weitere Evakuierung und die Prüfung auf Dichtheit erfolgen über den Anschluss 21.

In einem Ausführungsbeispiel der Erfindung wird aus Gründen einer schnellen Evakuierung und/oder aus Sicherheitsgründen auch beim Beispiel nach Figur 2 eine Rahmendichtung 17 und Mittel zur Evakuierung des äusseren Randbereichs, wie sie zu Figur 1 beschrieben sind, vorgesehen. Eine Verbindung der Leitung 16 mit dem Detektor ist dann nicht erforderlich.

Beim Ausführungsbeispiel nach Figur 3 sind die Rahmen 4, 5 jeweils zweiteilig (Rahmenteile 40, 41 bzw. 50, 51). Zwischen den zugehörigen Rahmenteilen 40, 41 bzw. 50, 51 sind die Folien 2, 3 eingespannt. Die der Bildung des Zwischenraumes 13 bildenden Mittel 12 sind lediglich als Linien dargestellt. Um bei zwischen den Folien 2, 3 eingeschlossenen Gegenständen eine Verbindung zwischen dem Testraum und einem Detektor sicherzustellen, ist ein sich vom Rand 5 in den Testraum erstreckendes Rohr 25 mit Bohrungen 26 vorhanden.

Nach der Durchführung einer Dichtheitsprüfung wird der Testraum belüftet, so dass die Rahmen 4, 5 voneinander entfernt und der geprüfte Gegenstand herausgenommen werden kann. Von der Grösse der Folien 2, 3 und der Grösse der verpackten Gegenstände hängt es ab, ob gleichzeitig die Verpackung von mehreren Gegenständen untersucht werden kann.

Die der Bildung des Zwischenraumes 13 dienenden Mittel 12 bestimmen den Ort der Dichtheitsprüfung. Dadurch besteht die Möglichkeit, die Dichtheitsprüfung auf relevante Bereiche - bei Ampullen z.B. nur der Bereich der Verschlüsse - zu beschränken. Der übrige Bereich einer Ampulle kann z.B. mit den ihr dicht anliegenden Folien 2, 3 die äussere Abdichtung des Testraumes bilden. Auch die einseitige Dichtheitsprüfung eines Gegenstandes (z.B. die Überprüfung der Dichtheit des Deckels einer Schale) ist möglich. In diesem Fall braucht nur eine der beiden Folien 2, 3 mit den Mitteln 12 ausgerüstet zu sein.

Die beim Gegenstand der Erfindung zu verwendenden Folien sollen bei einer Dicke von 0,4 mm äusserst dehnbar (Reissdehnung 400 bis 600 %) sein und eine hohe Reissfestigkeit (30 bis 50 MPa) haben. Folien dieser Art sind in der Lage, sich selbst der Form von kantigen Prüflingen kurzzeitig ohne bleibende Verformungen anzupassen. Folien mit diesen Eigenschaften sind auf dem Markt unter dem Namen PLATILON (Marke der Firma "elf atochem" Deutschland GmbH) bekannt. Dabei handelt es sich um Polyester- oder Polyetherurethan-Folien. Sie erlauben die gewünschte Dichtheitsprüfung mit Empfindlichkeiten, die unter 1 · 10⁻⁴ mbar l/s liegen, und zwar mit Prüfzeiten von wenigen Sekunden.

Figur 4 zeigt schematisch zur Durchführung einer Dichtheitsprüfung notwendige Einrichtungen. Gewählt ist eine Rahmenkonstruktion 1 mit einem zentralen Anschluss 21 für die Evakuierung des Testraumes und für seinen Anschluß an einen Testgasdetektor. Ausserdem ist die Leitung 16 (vgl. Figur 1) vorhanden, über die eine Evakuierung des Randbereiches erfolgt.

An den zentralen Anschluss 21 ist die Leitung 18 angeschlossen, die über das Ventil 27 mit der Vakuumpumpe 28 und über das Ventil 29 mit dem Detektor 30 in Verbindung steht. Über das Ventil 31 kann der Testraum belüftet werden. Die Leitung 16 steht über das Ventil 32 mit der Vakuumpumpe 33 in Verbindung. Über das Ventil 34 kann sie belüftet werden.

Die Steuerung der Dichtheitsprüfung erfolgt automatisch. Dazu siind eine Steuereinheit 35 mit einem Warn-/Alarm-Geber 36 vorgesehen. Druckabhängigen Steuervorgängen dienen die Drucksensoren 37 und 38, die den Druck in den Leitungen 16, 18 überwachen.

Der Ablauf einer Dichtheitsprüfung mit der Einrichtung nach Figur 4 erfolgt in der Weise, dass der zu prüfende Gegenstand zunächst auf die Folie 3 gelegt und die Rahmenkonstruktion 1 geschlossen wird. Sämtliche Ventile sind geschlossen. Durch Öffnen der Ventile 27 und 32 werden der den verpackten Gegenstand eng umschliessende Testraum gebildet und der Randbereich evakuiert. Im Testraum wird bereits nach kurzer Zeit (wenige Sekunden) ein Druck von etwa 1 mbar erreicht, der die Zuschaltung des Detektors 30 (Öffnen des Ventils 29) erlaubt. Der Detektor 30 ist zweckmässig ein Massensprektrometer, das auf das Testgas (das auch eine spezielle Gasmischung sein kann) eingestellt ist. Ist die Verpackung undicht, wird Testgas registriert. Von der Steuereinheit 35 wird der Warn-/Alarm-Signalgeber 36 aktiviert. Nach dem Abschluss der eigentlichen Leckprüfung werden die Ventile 27, 29, 32 geschlossen und die Belüftungs-Ventile 31, 34 geöffnet, so dass der geprüfte Gegenstand der Rahmenkonstruktion 1 entnommen werden kann.

## Patentansprüche

1. Vorrichtung zur Prüfung der Dichtheit der Verpackung (11) eines verpackten Gegenstandes (10), in welcher sich ein Testgas befindet, mit einem durch zwei dehnbare Folien (2, 3) gebildetenTestraum, der derart ausgebildet ist, dass ein den verpackten Gegenstand enthaltender Raum zwischen den Folien (2, 3) derart evakuier bar ist, dass die Folien (2, 3) in der Lage sind, den verpackten Gegenstand (10) einzuschliessen,
wobei die Folien (2, 3) zumindest in den Bereichen ihrer Oberflächen, die dem verpackten Gegenstand (10) zugewandt sind und in denen die Dichtheitsprüfung der Verpackung (11) stattfinden soll, Mittel (12) aufweisen, die einen zusammenhängenden Zwischenraum (13) über den zu prüfenden Bereichen der Verpackung (11) bilden,
wobei die Vorrichtung eine Rahmenkonstruktion (1) mit zwei Rahmen (4, 5) umfasst, in denen jeweils eine der besagten Folien (2 bzw. 3) befestigt ist, zwischen denen sich eine Dichtung (17) befindet und die über ein oder mehrere Scharniere (7) miteinander verbunden sind,
und wobei der Testraum mit einem testgasempfindlichen Detektor (30) verbunden ist, **dadurch gekennzeichnet,**
**dass** der Testraum mit zwei Evakuierungsanschlüssen (15, 22) ausgerüstet ist, von denen ein erster Anschluss (15) sich im Randbereich der Folien (2, 3) befindet und von denen der zweite Anschluss (21, 22) dort angeordnet ist, wo sich die Mittel (12) befinden, die den zusammen hängenden Zwischenraum (13) über den zu prüfenden Bereichen der Verpackung (11) bilden.

2. Vorrichtung nach Anspruch 1, **dadurch gekennzeichnet, dass** der im Randbereich befindliche Evakuierungsanschluss (15) über eine Leitung (16) mit einer ersten Vakuumpumpe (33) in Verbindung steht, dass der weitere Evakuierungsanschluss (21, 22) über eine Leitung (18) mit einer weiteren Vakuumpumpe (28) in Verbindung steht und dass an die Leitung (18) über ein Ventil (29) der Testgasdetektor (30) angeschlossen ist.

3. Vorrichtung nach Anspruch 1 oder 2, **dadurch gekennzeichnet, dass** das sich Helium mit einer Konzentration von 5 bis 25 %, vorzugsweise 10 %, innerhalb der Verpackung (22) befindet.

4. Vorrichtung nach Anspruch 1, 2 oder 3, **dadurch gekennzeichnet, daß** die Mittel (12), die den Zusammenhängenden Zwischenraum (13) über den zu prüfenden Bereichen der Verpackung (11) bilden, als separate Netze, Porenfolien, Sinterfolien, Noppenfolien oder dergleichen ausgebildet sind.

5. Vorrichtung nach Anspruch 4, **dadurch gekennzeichnet, dass** die Folien (2, 3) selbst mit Noppen oder einer porösen Schicht ausgerüstet sind.

6. Vorrichtung nach einem der Ansprüche 1 bis 5, **dadurch gekennzeichnet, dass** die Folien (2, 3) einer Reissdehnung von 400 bis 600 % und eine Reissfestigkeit von 30 bis 50 MBa haben.

7. Vorrichtung nach Anspruch 6, **dadurch gekennzeichnet, dass** die Folien aus Polyester- oder Polyetherurethan bestehen.

8. Vorrichtung nach einem der Ansprüche 1 bis 7, **dadurch gekennzeichnet, dass** der testgasempfindliche Detektor ein Massenspektrometer ist.

## Claims

1. Apparatus for testing the packaging (11) of a packaged article (10) for leaks, which packaging contains a test gas, comprising a test chamber, which is formed by two expandable foils (2, 3) and designed in such a way that a space between the foils (2, 3), which contains the packaged article, is evacuable in such a way that the foils (2, 3) are capable of enclosing the packaged article (10),
wherein the foils (2, 3) at least in the regions of their surfaces, which face the packaged article (10) and in which the testing of the packaging (11) for leaks is to occur, comprise means (12) of forming a coherent intermediate space (13) over the regions of the packaging (11) that are to be tested,
wherein the apparatus comprises a frame structure (1) having two frames (4, 5), in each of which one of the said foils (2 or 3) is fastened and between which a seal (17) is situated and which are connected to one another by one or more hinges (7),
and wherein the test chamber is connected to a detector (30) sensitive to the test gas,
**characterized in**
**that** the test chamber is equipped with two evacuation ports (15, 22), of which a first port (15) is situated in the edge region of the foils (2, 3) and of which the second port (21, 22) is disposed where the means (12) are situated, which form the coherent intermediate space (13) over the regions of the packaging (11) that are to be tested.

2. Apparatus according to claim 1, **characterized in that** the evacuation port (15) situated in the edge region is connected by a line (16) to a first vacuum pump (33), that the further evacuation port (21, 22) is connected by a line (18) to a further vacuum pump (28) and that the test gas detector (30) is connected by a valve (29) to the line (18).

3. Apparatus according to claim 1 or 2, **characterized in that** the helium of a concentration of 5 to 25 %, preferably 10 %, is situated inside the packaging (22) .

4. Apparatus according to claim 1, 2 or 3, **characterized in that** the means (12), which form the coherent intermediate space (13) over the regions of the packaging (11) that are to be tested, take the form of separate meshes, porous foils, sintered foils, knopped foils or the like.

5. Apparatus according to claim 4, **characterized in that** the foils (2, 3) themselves are equipped with knops or a porous layer.

6. Apparatus according to one of claims 1 to 5, **characterized in that** the foils (2, 3) have an elongation at break of 400 to 600 % and a tear strength of 30 to 50 MPa.

7. Apparatus according to claim 6, **characterized in that** the foils are made of polyester urethane or polyether urethane.

8. Apparatus according to one of claims 1 to 7, **characterized in that** the test gas-sensitive detector is a mass spectrometer.

## Revendications

1. Dispositif de contrôle de l'étanchéité de l'emballage (11) d'un objet emballé (10), dans lequel se trouve un gaz d'essai, comprenant un espace d'essai formé par deux feuilles (2, 3) extensibles, qui est configuré de telle sorte qu'un espace contenant l'objet emballé entre les deux feuilles (2, 3), peut être évacué de telle manière que les feuilles (2, 3) sont en mesure d'enfermer l'objet emballé (10),
les feuilles (2, 3) présentant, au moins dans les zones de leurs surfaces situées en regard de l'objet emballé (10) et dans lesquelles le contrôle d'étanchéité de l'emballage (11) doit avoir lieu, des moyens (12) constituant un espace intermédiaire (13) contigu avec les zones de l'emballage (11) à contrôler,
le dispositif comprenant un ensemble de cadre (1) avec deux cadres (4, 5), dans lesquels est à chaque fois fixée l'une desdites feuilles (2 ou 3), entre lesquels se trouve un joint d'étanchéité (17) et qui sont reliés l'un à l'autre au moyen d'une ou de plusieurs charnières (7), et l'espace d'essai étant relié à un détecteur (30) sensible au gaz d'essai,
**caractérisé en ce que**
l'espace d'essai est muni de deux raccords d'évacuation (15, 22), dont un premier raccord (15) se trouve dans la zone périphérique des feuilles (2, 3) et dont le deuxième raccord (21, 22), est disposé à l'endroit où se trouvent les moyens (12) qui constituent l'espace intermédiaire (13) contigu avec les zones de l'emballage (11) à contrôler.

2. Dispositif selon la revendication 1, **caractérisé en ce que** le raccord d'évacuation (15) situé dans la zone périphérique est en communication avec une première pompe à vide (33) par l'intermédiaire d'une conduite (16), **en ce que** l'autre raccord d'évacuation (21, 22) est en communication avec une autre pompe à vide (28) par l'intermédiaire d'une conduite (18), et **en ce que** le détecteur de gaz d'essai (30) est connecté à la conduite (18) par l'intermédiaire d'une vanne (29).

3. Dispositif selon la revendication 1 ou 2, **caractérisé en ce que** de l'hélium se trouve à l'intérieur de l'emballage (22) dans une concentration de 5 à 25%, de préférence de 10%.

4. Dispositif selon la revendication 1, 2 ou 3, **caractérisé en ce que** les moyens (12) constituant l'espace intermédiaire (13) contigu avec les zones de l'emballage (11) à contrôler présentent la forme de filets, feuilles poreuses, feuilles frittées, feuilles nopées ou similaires séparées.

5. Dispositif selon la revendication 4, **caractérisé en ce que** les feuilles (2, 3) elles-mêmes sont munies de nopes ou d'une couche poreuse.

6. Dispositif selon l'une quelconque des revendications 1 à 5, **caractérisé en ce que** les feuilles (2, 3) présentent une élongation à la rupture de 400 à 600% et une résistance à la déchirure de 30 à 50 MBa.

7. Dispositif selon la revendication 6, **caractérisé en ce que** les feuilles sont en polyester-uréthane ou polyéther-uréthane.

8. Dispositif selon l'une quelconque des revendications 1 à 7, **caractérisé en ce que** le détecteur sensible au gaz d'essai est un spectromètre de masse.
